# EUROPEAN PATENT APPLICATION

(11) **EP 2 874 254 A1**
(43) Date of publication of application: **20.05.2015**
(21) Application number: 13816171.6
(22) Date of filing: 09.07.2013
(51) Int. Cl.: H02G 3/04, B60R 16/02, H05K 7/00

(54) **PROTECTOR**

(30) Priority: 13.07.2012 JP 2012157835
(71) Applicant: Yazaki Corporation, Minato-ku Tokyo 108-8333 (JP)
(72) Inventor: KAMIGAICHI Shungo, Hiroshima-shi Hiroshima 732-0045 (JP)
(74) Representative: Grünecker Patent- und Rechtsanwälte PartG mbB
(86) International application number: PCT/JP2013/068760
(87) International publication number: WO 2014/010595

(57) **Abstract**

Projection strips (31) are formed on the inner surface of a bottom wall (17) between a pair of side walls (19a, 19b). Of boundary portions between each projection strip (31) and the two respective side walls (19a, 19b), a boundary wall located lower in the vertical direction when a protector (11) is attached to a vehicle is formed with an ejection opening (41).

## Description

### Technical Field

The present invention relates to a protector for protecting cables.

### Background Art

Conventionally, protectors are used for protecting a bundle of cables (i.e., wire harness) that is wired in a vehicle such as an automobile (refer to Patent document 1).

### Citation List

### Patent Literature

[PTL 1] Japanese Patent Publication No. JP-A-2005-160222

### Summary of Invention

### Technical Problem

The protector disclosed in Patent document 1 is equipped with a protector main body which is composed of a bottom wall and a pair of side walls that are erected from the bottom wall, assumes a gutter-like shape, and has a top opening. The protector is also equipped with a plate-like lid. The lid is attached to the protector main body that houses part of a wire harness inside, so as to cover the top opening of the protector main body. The protector holds the wire harness between the bottom wall and the lid so as to press it. The protector is fixed to a vehicle.

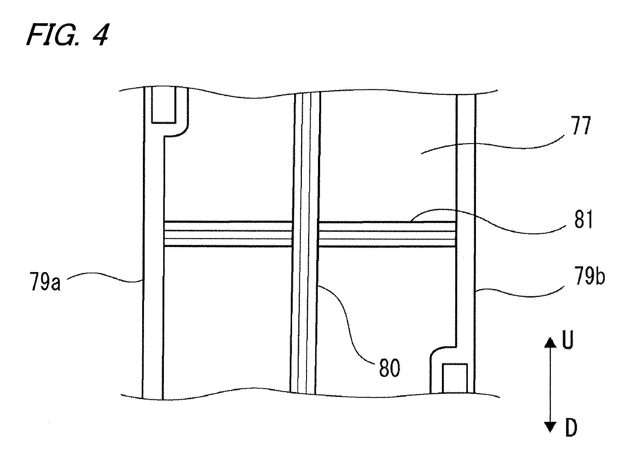

Among conventional protectors are one shown in Fig. 4 which also has projection strips 81 which project from a bottom wall 77 and extends perpendicularly to a pair of side walls 79a and 79b so as to bridge them. In the protector having this configuration, wire harnesses (not shown) are held between the projection strips 81 and a lid (not shown). Therefore, the protector can hold the wire harnesses more strongly than in a case that the projection strips 81 are not formed. Two cables are housed in the protector shown in Fig. 4. Therefore, a partition wall 80 is also erected from the bottom wall 77, between the pair of side walls 79a and 79b. In housing cables, the cables are wired on the bottom wall 77 so as to be placed between the partition wall 80 and the two respective side walls 79a and 79b.

Incidentally, there are protectors which are attached to a vehicle so as to be exposed to the outside of the vehicle. In such protectors that are used in a state that they are exposed to the outside of a vehicle, water or sand more likely goes into the protector through, for example, wire harness lead-out openings and gaps between the protector main body and the lid than protectors that are used in a state that they are not exposed to the outside of a vehicle.

A description will be made of a case that the conventional protector shown in Fig. 4 is used as a protector that is used in a state that it is exposed to the outside of a vehicle. For example, assume that the conventional protector is attached to a vehicle so as to be exposed to the outside of the vehicle with such an orientation that the top side of Fig. 4 is the top side in the vertical direction (indicated by "U" in Fig. 4; in Fig. 4, the bottom side in the vertical direction is indicated by "D"). In this case, water or sand that has come into the protector may be stopped by projection strips 81 and accumulated between the projection strips 81 and the wire harnesses.

The wire harnesses and/or protector may be vibrated because of, for example, vibration of the vehicle drive system. In such a case, if sand is accumulated between the projection strip 81 and the wire harnesses, the sand and each wire harness may rub against each other to cause wear of the surface of the wire harnesses.

If water is accumulated between projection strips 81 and the wire harnesses, the protector may be damaged when the water expands in turning to ice. In that event, as in the case of sand, the water and each wire harness may rub against each other to cause wear of the surface of the wire harnesses.

The present invention has been made in view of the above circumstances, and an object of the present invention is therefore to provide a protector which can prevent wear of cables and damaging of the protector due to accumulation of sand or water inside the protector.

### Solution to Problem

To attain the above object, the invention provides protectors having the following features that are given in the form of items (1)-(4):
(1) A protector to be attached to a vehicle, comprising:
   a protector main body which has a bottom wall and a pair of erected walls erected from the bottom wall so as to be opposed to each other and in which an inner surface of the bottom wall and inner surfaces of the pair of erected walls form a housing groove in which to house a cable or cables; and
   a lid which is engaged with the protector main body so as to cover the housing groove, wherein:
      the protector main body further has projection strips which project from the inner surface of the bottom wall toward the lid and are formed between the pair of erected walls so as to extend in a direction that crosses the pair of erected walls;
      of boundary portions between each of the projection strips and the pair of erected walls, a boundary portion located lower in the vertical direction when the protector is attached to the vehicle is formed with an ejection opening; and
      the cable or cables wired in the housing groove are pressed by the lid and the projection strips and thereby held between them.
(2) In the protector having the configuration of item (1), the projection strips extend across the inner surface of the bottom wall in an ejection direction which crosses each of a wiring direction of the cable or cables and a direction that is perpendicular to the wiring direction.
(3) In the protector having the configuration of item (1) or (2), wherein:
   the protector further comprises a partition wall which is erected from the bottom wall, disposed between the pair of erected walls, and opposed to the pair of erected walls in such a manner that the cables are interposed between itself and the pair of erected walls, respectively:
      the projection strips have first projection strips formed between one of the pair of erected walls and the partition wall and second projection strips formed between the other of the pair of erected walls and the partition wall;
      of a boundary portion, adjacent to the one erected wall, of each of the first projection strips and a boundary portion, adjacent to the other erected wall, of the first projection strip, a boundary portion located lower in the vertical direction when the protector is attached to the vehicle is formed with a first ejection opening;
      of a boundary portion, adjacent to the other erected wall, of each of the second projection strips and a boundary portion, adjacent to the partition wall, of the second projection strip, a boundary portion located lower in the vertical direction when the protector is attached to the vehicle is formed with a second ejection opening; and
      the cables are held between the lid and the first projection strips and the second projection strips.
(4) In the protector having the configuration of any one of items (1) to (3), the protector is attached to the vehicle so as to be exposed to the outside of the vehicle.

In the protector having the configuration of item (1), in a state that it is attached to a vehicle, sand or water (hereinafter may be referred to as extraneous matter) that has come into the protector does not tend to remain between a projection strip and a cable but tends to be guided along the projection strip to the ejection opening. Therefore, the extraneous matter tends to be ejected downward (i.e., away from the projection strip) through the ejection opening. Thus, the probability that the extraneous matter remains inside the protector as it is is lowered.

In the protector having the configuration of item (2), in a state that it is attached to a vehicle, since the projection strips extend in a direction that is inclined from the cable wiring direction, extraneous matter does not tend to remain between a projection strip and a cable but tends to be guided along the projection strip to the ejection opening. Therefore, the extraneous matter tends to be ejected downward (i.e., away from the projection strip) through the ejection opening. Thus, the probability that the extraneous matter remains inside the protector as it is is lowered.

In the protector having the configuration of item (3) which is equipped with the partition wall which is opposed to the pair of erected walls with cables interposed between itself and the two respective erected walls (two cables are thus housed), extraneous matter does not tend to remain between projection strips and the cables but tends to be guided along the first projection strip and the second projection strip to the first ejection opening and the second ejection opening, respectively. Therefore, the extraneous matter tends to be ejected downward (i.e., away from the first projection strip and the second projection strip) through the first ejection opening and the second ejection opening. Thus, the probability that the extraneous matter remains inside the protector as it is is lowered.

In the protector having the configuration of item (4), since it is attached to a vehicle so as to be exposed to the outside of the vehicle, extraneous matter tends to go into the protector. However, the extraneous matter does not tend to remain between a projection strip and a cable but tends to be guided along the projection strip to the ejection opening. Therefore, the extraneous matter tends to be ejected downward (i.e., away from the projection strip) through the ejection opening. Thus, the probability that the extraneous matter remains inside the protector as it is is lowered.

### Advantageous Effects of Invention

The protector according to the embodiment can prevent wear of a cable or cables and damaging of the protector due to sand or water staying inside the protector.

The invention has been described above concisely. The details of the invention will become more apparent when modes for carrying out the invention (hereinafter referred to as an embodiment) described below are read through with reference to the accompanying drawings.

### Brief Description of the Drawings

[Fig. 1] Fig. 1 is an exploded perspective view of a protector 11 according to the embodiment of the present invention.
[Fig. 2] Fig. 2 is a plan view of a protector main body 13 of the protector 11 shown in Fig. 1.
[Fig. 3] Fig. 3 is an explanatory diagram schematically showing a portion, corresponding to part A of Fig. 2, of the protector 11.
[Fig. 4] Fig. 4 is an explanatory diagram schematically showing a conventional protector.

### Description of Embodiments

A protector according to a specific embodiment of the present invention will be hereinafter described with reference to the drawings.

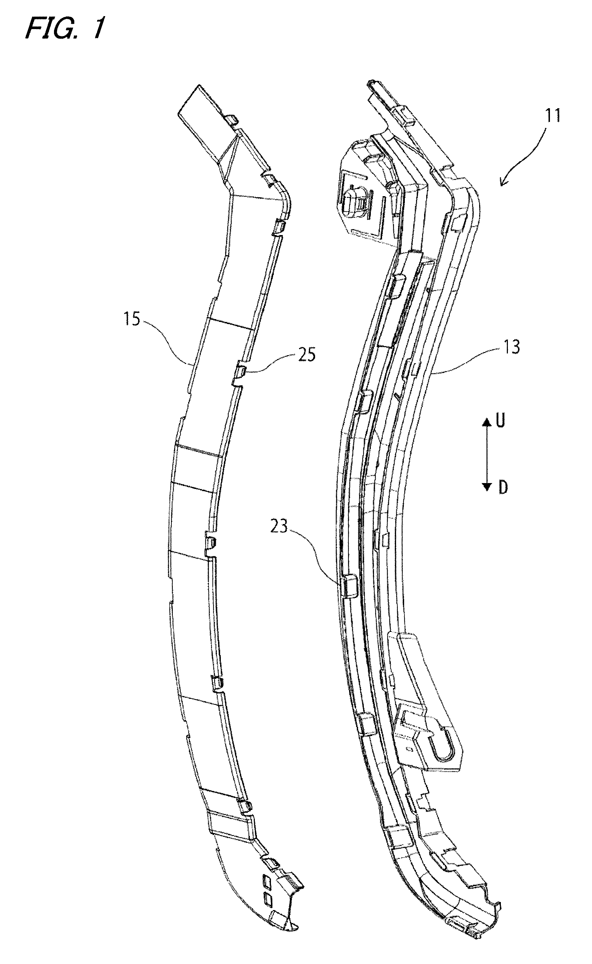

A protector 11 according to the embodiment is attached to a vehicle so as to be exposed to the outside of the vehicle and used for protecting cables wired in the vehicle. As indicated by arrows in Figs. 1-3, the protector 11 is attached to the vehicle in such a manner that the top side in each figure is the top side in the vertical direction. That is, in Figs. 1-3, "U" and "D" indicate the top side and the bottom side in the vertical direction, respectively. Each cable wired in the protector 11 may be either a single wire or a bundle of cables.

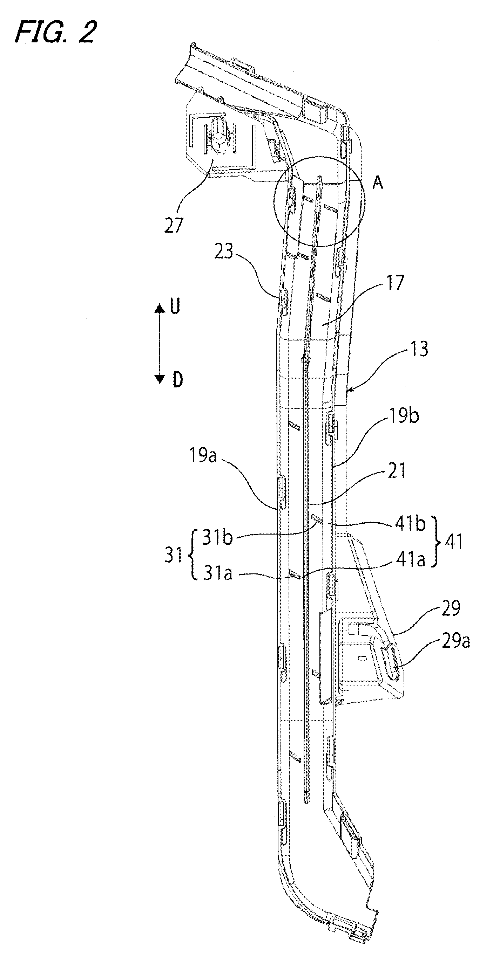

First, members etc. constituting the protector 11 according to the embodiment will be described with reference to Figs. 1 and 2. Fig. 1 is an exploded perspective view of the protector 11 according to the embodiment of the invention. Fig. 2 is a plan view of a protector main body 13 of the protector 11 shown in Fig. 1.

As shown in Figs. 1 and 2, the protector 11 according to the embodiment is equipped with the protector main body 13 and a lid 15 which form a long tubular body capable of housing parts of cables (not shown) when combined together. The protector main body 13 is composed of a bottom wall 17 and a pair of side walls 19a and 19b which are erected walls erected from the bottom wall 17 so as to assume a gutter-like shape, and is opened on the destination side in the erecting direction of the side walls 19a and 19b (i.e., on the viewer's side of Fig. 2). That is, in the protector main body 13, the inner surface of the bottom wall 17 and the inner surfaces of the side walls 19a and 19b form a housing groove for housing cables. The lid 15 assumes a plate-like shape and is attached to the protector main body 13 from the destination side in the erecting direction so as to close the opening of the protector main body 13. The protector main body 13 and the lid 15 are engaged with each other when corresponding ones of lock portions 23 formed on the protector main body 13 and lock portions 25 formed on the lid 15 are locked on each other.

The protector 11 according to the embodiment houses two cables. Therefore, a partition wall 21 is also erected from the bottom wall 17, between the pair of side walls 19a and 19b. Cables are housed so as to be placed on the bottom wall 17 between the partition wall 21 and the two respective side walls 19a and 19b. That is, cables are housed in such a manner that the pair of side walls 19a and 19b are opposed to each other with the cables interposed in between and the partition wall 21 is opposed to each of the pair of side walls 19a and 19b with one cable interposed in between. The cables are housed in the above-mentioned housing groove.

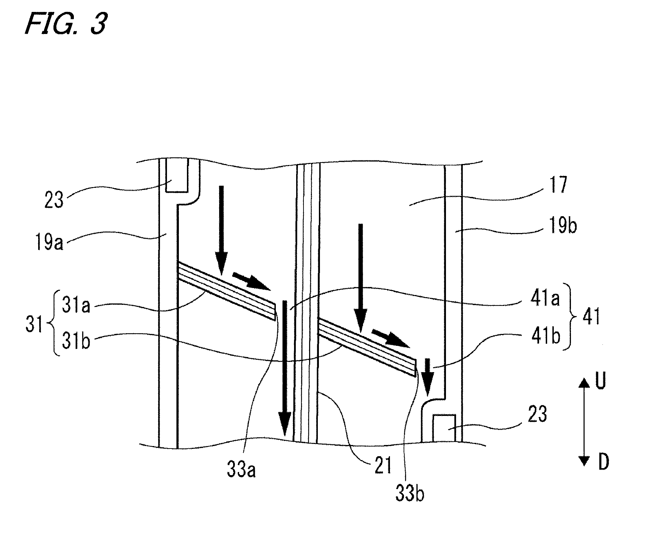

Fig. 3 is an explanatory diagram schematically showing a portion, corresponding to part A of Fig. 2, of the protector 11 according to the embodiment. The protector main body 13 has projection strips 31 which project from the inner surface of the bottom wall 17 in the above-mentioned erecting direction (i.e., toward the lid 15 in a state that it is attached to the protector main body 13). The projection strips 31 are provided between the pair of side walls 19a and 19b so as to extend in a direction that crosses the pair of side walls 19a and 19b. The projection strips 31 extend in the ejection direction that crosses each of the cable wiring direction of the protector 11 and the direction that is perpendicular to the wiring direction (i.e., the projection strips 31 extend so as to be inclined in Fig. 3). The projection strips 31 have first projection strips 31 a which are provided between the one side wall 19a of the pair of side walls 19a and 19b and the partition wall 21 and second projection strips 31 b which are provided between the other side wall 19b and the partition wall 21. In the embodiment, as shown in Fig. 3, there are a first projection strip 31 a and a second projection strip 31 b that extend in the same direction along the same straight line. Of a boundary portion, adjacent to the side wall 19a, of each first projection strip 31 a and its boundary portion adjacent to the partition wall 21, that boundary portion adjacent to the partition wall 21 which is located lower in the vertical direction in a state that the protector 11 is attached to a vehicle is cut away so as to form a first ejection opening 41 a. Of a boundary portion, adjacent to the side wall 19a, of each second projection strip 31 b and its boundary portion adjacent to the partition wall 21, that boundary portion adjacent to the partition wall 21 which is located lower in the vertical direction in a state that the protector 11 is attached to a vehicle is cut away so as to form a second ejection opening 41 b. As such, the protector 11 has the first ejection openings 41 a and the second ejection openings 41 b which are ejection openings 41.

From another point of view, it can be said that a first ejection opening 41 a is formed in one, located lower in the vertical direction in a state that the protector 11 is attached to a vehicle, of a connection portion of each first projection strip 31 a to the one side wall 19a and its connection portion to the partition wall 21, and that a second ejection opening 41b is formed in one, located lower in the vertical direction in a state that the protector 11 is attached to a vehicle, of a connection portion of each second projection strip 31 b to the other side wall 19b and its connection portion to the partition wall 21.

From a further point of view, it can be said that a gap as an ejection opening is formed between an end face 33a, located lower in the vertical direction in a state that the protector 11 is attached to a vehicle, of the end faces of the first projection strip 31 a and the partition wall 21 which is opposed to the end face 33a, and that a gap as an ejection opening is formed between an end face 33b, located lower in the vertical direction in a state that the protector 11 is attached to a vehicle, of the end faces of the second projection strip 31 b and the side wall 19b which is opposed to the end face 33b.

In a state that cables are housed, they are held between the projection strips 31 and the lid 15 which serves as a pressing wall. In this state, one of the two cables is held between the first projection strips 31 a and the lid 15 and the other cable is held between the second projection strips 31 b and the lid 15. Thus, the cables are prevented from coming off the protector 11.

As shown in Fig. 2, in the protector 11 according to the embodiment, the plural projection strips 31 are arranged in the cable winding direction. As shown in Fig. 2, part of the plural projection strips 31 (first strips 31 a and second strips 31 b) are arranged in a staggered manner in the cable wiring direction. With these measures, in a state that cables are housed, even if the bottom wall 17 and the lid 15 are deformed because cables are held between them, influences of the deformation can be distributed in the cable wiring direction. Furthermore, in the protector 11 according to the embodiment, to suppress influences of such deformation, the lock portions 23 are formed at staggered positions corresponding to the first strips 31 a and second strips 31 b that are arranged in a staggered manner.

A vehicle fixing lock projection 27 is formed outside one end of the protector main body 13. And a vehicle fixing bracket 29 through which a vehicle fixing lock hole 29a is formed is formed outside the other end of the protector main body 13. The protector 11 according to the embodiment is fixed to a vehicle at a predetermined fixing position when the vehicle fixing lock projection 27 is fitted into a protector lock recess (not shown) formed in the vehicle and fastening is made using a bolt that is inserted through the vehicle fixing lock hole 29a and a protector lock hole (not shown) formed in the vehicle.

The plate-like lid 15 is formed so as to conform to a plan-view shape of the protector main body 13, that is, the bottom wall 17. As described above, in a state that cables are housed, the lid 15 is opposed to the bottom wall 17 with the cables interposed in between and serves as the pressing wall for holding the cables between itself and the projection strips 31 by pressing them. Although the protector main body 13 is curved in the embodiment, it may assume a straight shape. And the lid 15 is formed so as to conform to the shape of the protector main body 13.

In the following, a description will be made of how the protector 11 works when sand or water (hereinafter may be referred to as extraneous matter) has come into the protector 11 according to the embodiment through, for example, the cable lead-out openings formed at the two respective ends of the protector 11 and gaps between the protector main body 13 and the lid 15.

As indicated by arrows in Fig. 3, extraneous matter moves inside the protector 11 according to gravity and reaches (or comes close to) a projection strip 31. After reaching the projection strip 31, the extraneous matter can be guided along the projection strip 31 to the ejection opening 41 and ejected downward through the ejection opening 41. In another case, the extraneous matter that has come close to the projection strip 31 can be ejected downward through the ejection opening 41 without coming into contact with the projection strip 31.

More specifically, extraneous matter that has come into the protector 11 and reached projection strips 31 can be guided along a first projection strip 31a and a second projection strip 31 b to the first ejection opening 41 a and the second ejection opening 41 b and ejected downward (i.e., away from the first projection strip 31 a and the second projection strip 31 b) through the first ejection opening 41 a and the second ejection opening 41 b.

In this manner, in the protector 11 according to the embodiment, extraneous matter that has come into the protector 11 tends to be ejected to outside the protector 11 in such a manner that it flows down (ejected downward) sequentially through the ejection openings 41 of plural projection strips 31.

In the protector 11 according to the embodiment, the partition wall 21 (erected wall) is erected from the bottom wall 17 between the pair of side walls 19a and 19b and a total of two cables are housed inside the protector 11. However, a configuration without the partition wall 21 is possible. In this case, of boundary portions, adjacent to the pair of side walls 19a and 19b, of each projection strip 31 which is formed between them, that boundary portion adjacent to the side wall 19b which is located lower in the vertical direction in a state that the protector 11 is attached to a vehicle is cut away so as to form an ejection opening 41. Also in this configuration, extraneous matter that has come into the protector 11 moves inside the protector 11 according to gravity and reaches a projection strip 31. Then the extraneous matter can be guided along the projection strip 31 to the ejection opening 41 and ejected downward (i.e., away from the projection strip 31) through the ejection opening 41. In this manner, also in the configuration without the partition wall 21, extraneous matter that has come into the protector 11 tends to be ejected to outside the protector 11 in such a manner that it flows down (ejected downward) sequentially through the ejection openings 41 of projection strips 31.

The workings and the advantages of the protector 11 according to the embodiment will be described below.

The protector 11 according to the embodiment is equipped with the protector main body 13. The protector main body 13 has the bottom wall 17 and the pair of side walls 19a and 19b which are erected from the bottom wall 17 so as to be opposed to each other, and the inner surface of the bottom wall 17 and the inner surfaces of the pair of erected walls 19a and 19b form the housing groove in which to house cables. The protector 11 is also equipped with the lid 15 which is engaged with the protector main body 13 so as to cover the housing groove. The protector main body 13 further has projection strips 31 which project from the inner surface of the bottom wall 17 toward the lid 15 and are formed between the pair of side walls 19a and 19b so as to extend in a direction that crosses the pair of side walls 19a and 19b. Of boundary portions between each of the projection strips 31 and the pair of side walls 19a and 19b, a boundary portion located lower in the vertical direction when the protector 11 is attached to the vehicle is formed with an ejection opening 41. The cables wired in the housing groove are pressed by the lid 15 and the projection strips 31 and thereby held between them.

With this configuration, in a state that the protector 11 is attached to a vehicle, extraneous matter does not tend to remain between a projection strip 31 and a cable but tends to be guided along the projection strip 31 to the ejection opening 41. Therefore, the extraneous matter tends to be ejected downward (i.e., away from the projection strip 31) through the ejection opening 41. Thus, the probability that the extraneous matter remains inside the protector 11 as it is is lowered.

As a result, the protector 11 according to the embodiment can prevent wear of cables and damaging of the protector 11 due to sand or water staying inside the protector 11.

In the protector 11 according to the embodiment, the projection strips 31 extend across the inner surface of the bottom wall 17 in an ejection direction which crosses each of a wiring direction of the cables and a direction that is perpendicular to the wiring direction.

With this configuration, in a state that the protector 11 is attached to a vehicle, since the projection strips 31 extend in the direction that is inclined from the cable wiring direction, extraneous matter does not tend to remain between a projection strip 31 and a cable but tends to be guided along the projection strip 31 to the ejection opening. Therefore, the extraneous matter tends to be ejected downward (i.e., away from the projection strip 31) through the ejection opening 41. Thus, the probability that the extraneous matter remains inside the protector 11 as it is is lowered.

The protector according to the embodiment is further equipped with the partition wall 21 which is erected from the bottom wall 17, disposed between the pair of side walls 19a and 19b, and opposed to the pair of side walls 19a and 19b in such a manner that the cables are interposed between itself and the pair of side walls 19a and 19b, respectively. The projection strips 31 are the first projection strips 31 a formed between the one side wall 19a of the pair of side walls 19a and 19b and the partition wall 21 and the second projection strips 31 b formed between the other side wall 19b of the pair of side walls 19a and 19b and the partition wall 21. Of a boundary portion, adjacent to the one side wall 19a, of each of the first projection strips 31 a and a boundary portion, adjacent to the partition wall 21, of the first projection strip 31 a, a boundary portion located lower in the vertical direction when the protector 11 is attached to the vehicle is formed with a first ejection opening 41a. Of a boundary portion, adjacent to the other side wall 19b, of each of the second projection strips 31 b and a boundary portion, adjacent to the partition wall 21, of the second projection strip 31 b, a boundary portion located lower in the vertical direction when the protector 11 is attached to the vehicle is formed with a second ejection opening 41 b. One of the cables is held between the lid 15 and the first projection strips 31 a and the other cable is held between the lid 15 and the second projection strips 31 b.

With this configuration, since the protector 11 is equipped with the partition wall 21 which is opposed to the pair of side walls 19a and 19b with cables interposed between itself and the two respective erected walls 19a and 19b (two cables are thus housed), extraneous matter does not tend to remain between projection strips 31 and the cables but tends to be guided along a first projection strip 31 a and second projection strip 31 b to the first ejection opening 41 a and the second ejection opening 41 b, respectively. Therefore, the extraneous matter tends to be ejected downward (i.e., away from the first projection strip 31 a and the second projection strip 31 b) through the first ejection opening 41 a and the second ejection opening 41 b. Thus, the probability that the extraneous matter remains inside the protector 11 as it is is lowered.

The protector 11 according to the embodiment is attached to the vehicle so as to be exposed to the outside of the vehicle.

In the protector 11 according to the embodiment, in the case where it is attached to a vehicle so as to be exposed to the outside of the vehicle, extraneous matter tends to go into the protector 11. However, the extraneous matter does not tend to remain between a projection strip 31 and a cable but tends to be guided along the projection strip 31 to the ejection opening 41. Therefore, the extraneous matter tends to be ejected downward (i.e., away from the projection strip 31) through the ejection opening 41. Thus, the probability that the extraneous matter remains inside the protector 11 as it is is lowered.

The technical scope of the invention is not limited to the above-described embodiment. Various modifications, improvements, etc. can be made of the above-described embodiment without departing from the technical scope of the invention.

For example, although in the protector 11 according to the embodiment the first projection strips 31 a and the second projection strips 31 b extend in the same direction, the first projection strips 31 a and the second projection strips 31 b may extend in different directions because it suffices to provide a mode that extraneous matter flows down along first projection strips 31 a and second projection strips 31 b.

In the protector 11 according to the embodiment, of boundary portions between each projection strip 31 and the pair of side walls 19a and 19b, a boundary portion located lower in the vertical direction when the protector 11 is attached to the vehicle is formed with an ejection opening 41. Alternatively, of boundary portions between each projection strip 31 and the pair of side walls 19a and 19b, a boundary portion located higher in the vertical direction when the protector 11 is attached to the vehicle may additionally be formed with an ejection opening. A still another configuration is possible in which a halfway portion of each projection strip 31 is cut away and an ejection opening is formed there additionally.

Although the protector 11 according to the embodiment is equipped with the lid 15 which is combined with the protector main body 13, it suffices to dispose a member having a pressing wall function for holding cables between itself and the bottom wall 17. For example, a configuration is possible in which a lid portion that is integral with the protector main body 13 is opposed to the bottom wall 17 with cables interposed in between and cables are held between itself and the projection strips 31.

In the protector 11 according to the embodiment, each projection strip 31 is not connected to one of the pair of side walls 19a and 19b because of formation of an ejection opening 41. Another configuration is possible in which a portion where each projection strip 31 is connected to one of the side walls 19a and 19b is formed with an ejection opening.

The present application is based on Japanese Patent Application No. 2012-157835 filed on July 13, 2012, the disclosure of which is incorporated herein by reference.

### Industrial Applicability

The protector according to the invention is useful in being capable of preventing wear of cables and damaging of the protector due to accumulation of sand or water inside the protector.

### Reference Signs List

- 11:: Protector
- 13:: Protector main body
- 15:: Lid
- 17:: Bottom wall
- 19a:: Side wall (erected wall)
- 19b:: Side wall (erected wall)
- 21:: Partition wall (erected wall)
- 23:: Lock portion
- 25:: Lock portion
- 27:: Vehicle fixing lock projection
- 29:: Bracket
- 29a:: Vehicle fixing lock hole
- 31:: Projection strip
- 31a:: First projection strip
- 31b:: Second projection strip
- 33a:: End face
- 33b:: End face
- 41:: Ejection opening
- 41a:: First ejection opening
- 41b:: Second ejection opening
- 77:: Bottom wall
- 79a:: Side wall
- 79a:: Side wall
- 80:: Partition wall
- 81:: Projection strip

## Claims

1. A protector to be attached to a vehicle, comprising:
a protector main body which has a bottom wall and a pair of erected walls erected from the bottom wall so as to be opposed to each other and in which an inner surface of the bottom wall and inner surfaces of the pair of erected walls form a housing groove in which to house a cable or cables; and
a lid which is engaged with the protector main body so as to cover the housing groove, wherein:
the protector main body further has projection strips which project from the inner surface of the bottom wall toward the lid and are formed between the pair of erected walls so as to extend in a direction that crosses the pair of erected walls;
of boundary portions between each of the projection strips and the pair of erected walls, a boundary portion located lower in the vertical direction when the protector is attached to the vehicle is formed with an ejection opening; and
the cable or cables wired in the housing groove are pressed by the lid and the projection strips and thereby held between them.

2. The protector according to claim 1, wherein the projection strips extend across the inner surface of the bottom wall in an ejection direction which crosses each of a wiring direction of the cable or cables and a direction that is perpendicular to the wiring direction.

3. The protector according to claim 1 or 2, further comprising a partition wall which is erected from the bottom wall, disposed between the pair of erected walls, and opposed to the pair of erected walls in such a manner that the cables are interposed between itself and the pair of erected walls, respectively, wherein:
the projection strips have first projection strips formed between one of the pair of erected walls and the partition wall and second projection strips formed between the other of the pair of erected walls and the partition wall;
of a boundary portion, adjacent to the one erected wall, of each of the first projection strips and a boundary portion, adjacent to the other erected wall, of the first projection strip, a boundary portion located lower in the vertical direction when the protector is attached to the vehicle is formed with a first ejection opening;
of a boundary portion, adjacent to the other erected wall, of each of the second projection strips and a boundary portion, adjacent to the partition wall, of the second projection strip, a boundary portion located lower in the vertical direction when the protector is attached to the vehicle is formed with a second ejection opening; and
the cables are held between the lid and the first projection strips and the second projection strips.

4. The protector according to any one of claims 1 to 3, wherein the protector is attached to the vehicle so as to be exposed to the outside of the vehicle.
